# FASCICULE DE BREVET EUROPEEN

(11) **EP 0 933 899 B1**
(45) Date de publication et mention de la délivrance du brevet: **07.02.2007**
(21) Numéro de dépôt: 99400100.6
(22) Date de dépôt: 15.01.1999
(51) Int. Cl.: G05B 19/418, H04L 12/403

(54) **Protocole de transmission de données sur un bus de communication**
Protokoll zur Datenübertragung über einen Kommunikationsbus
Protocol for data transmission on a communication bus

(30) Priorité: 30.01.1998 FR 9801196
(43) Date de publication de la demande: 04.08.1999
(73) Titulaire: SCHNEIDER ELECTRIC INDUSTRIES SAS, 92500 Rueil-Malmaison (FR)
(72) Inventeur: Briant, Joseph, 78160 Marly-Le-Roi (FR)

(56) Documents cités:
- KRIESEL W ET AL: "ASI IM UEBERBLICK" AKTUATOR SENSOR INTERFACE FUER DIE AUTOMATION, 1994, pages 11-60, XP002062938
- "AKTUATOR-SENSOR-SCHNITTSTELLE: ERNEUERTES PROFIL" ELEKTRONIK, vol. 45, no. 15, 23 juillet 1996 (1996-07-23), page 20, XP000621135

## Description

La présente invention se rapporte à un protocole bidirectionnel de transmission d'informations sur un bus de communication, plus particulièrement sur un bus de terrain à bas niveau de type AS-i (initiales de Actuator Sensor Interface).

Le bus ou réseau AS-i est utilisé pour raccorder des capteurs et des actionneurs binaires d'un appareillage électrique à une unité de contrôle et de commande tel qu'un automate programmable. L'appareillage électrique peut par exemple consister en un variateur de vitesse destiné à commander un moteur électrique, ou en un relais de protection destiné à protéger un moteur électrique.

Le réseau AS-i comprend un support de transmission de données et d'alimentation constitué d'un câble non blindé de deux fils, de modules d'interface esclaves qui sont connectés au câble et associés aux capteurs et actionneurs de l'appareillage électrique de commande ou de protection, et d'un module d'interface maître qui est connecté au câble et associé à l'unité de contrôle et de commande et gère les échanges de données avec les esclaves de l'appareillage électrique.

Le maître communique avec les esclaves en les interrogeant sous forme d'un signal de requête comprenant l'adresse de l'esclave et l'information à lui communiquer, auquel chacun répond sous forme d'un signal de réponse comprenant l'information à transmettre au maître.

L'échange des informations entre le module maître et les modules esclaves est aujourd'hui réalisé au moyen d'un protocole de transmission dit "standard" ou d'un protocole de transmission dit "analogique".

Le protocole "standard" est bidirectionnel, c'est-à-dire que le maître peut commander un esclave et obtenir en retour l'état de cet esclave. Ce protocole utilise pour l'échange des informations 4 bits pour la requête du module maître et 4 bits pour la réponse du module esclave.

Prenons l'exemple d'un automate programmable pour le maître et d'un variateur de vitesse pour l'esclave destiné à commander un moteur électrique. Les deux premiers bits de la requête définissent respectivement, la marche avant du moteur et la marche arrière du moteur. Les deux autres bits permettent de coder, pour la marche du moteur, une vitesse de consigne dont la valeur est préenregistrée dans la mémoire du variateur de vitesse. La valeur de la vitesse de consigne ne peut être que préenregistrée car deux bits ne suffisent pas pour coder, à partir de l'automate, une valeur analogique de la vitesse. Par conséquent ce protocole ne permet pas une souplesse de commande du variateur.

Prenons comme autre exemple, celui d'un automate programmable pour le maître et d'un relais de protection pour l'esclave destiné à protéger un moteur électrique triphasé. Les quatre bits du signal de réponse permettent de renseigner, d'une part, sur l'information d'un courant de défaut, à savoir que le courant alimentant le moteur devient anormal, et d'autre part, sur l'information de déclenchement d'arrêt d'alimentation lorsque le courant a dépassé une valeur de seuil. Cependant, il est impossible à partir de quatre bits de renseigner sur la valeur réelle du courant dans chaque phase du moteur.

Le protocole "standard" présente donc l'inconvénient de ne pouvoir utiliser que 4 bits pour la transmission d'une requête ou d'une réponse.

Le protocole "analogique" est unidirectionnel. Ce protocole utilise 4 bits pour l'information d'un signal de requête et 24 bits pour l'information d'un signal de réponse qui sont répartis en 8 triplets de 3 bits et délivrés chacun en au moins 5 ms. La durée d'une réponse de la part de l'esclave est donc de 40 ms au minimum. Les 4 bits de la requête sont utilisés, non pas pour commander l'esclave, mais pour interroger la valeur de chaque triplet du signal de réponse. C'est en ce sens que ce protocole est unidirectionnel; il ne permet que de recevoir l'état d'un esclave.

Par conséquent, ce protocole unidirectionnel présente l'inconvénient de ne pas pouvoir commander une fonction à réaliser par l'esclave. De plus, lorsque l'on veut l'utiliser pour le renseignement de données que peut fournir l'esclave, cela nécessite un temps relativement long d'au moins 40 ms.

Le but de l'invention est donc de fournir un protocole bidirectionnel qui permet d'utiliser plus de 4 bits pour les transmissions d'une requête et d'une réponse tout en réalisant ces transmissions en moins de 40 ms.

Le document XP-002062938 "AS-i im Überblick" décrit déjà un procédé bidirectionnel de transmission d'informations sur un bus de terrain entre un automate programmable et des capteurs/actionneurs, dans une communication maître/esclave au moyen de requêtes et de réponses codées en binaire sur quatre bits. Le document XP-00621135 "AS-i : Erneuertes Profil" décrit que les signaux de requête ou de réponse utilisent au plus trois bits pour le codage du contenu de l'information.

L'invention concerne donc un procédé bidirectionnel de transmission d'informations sur un bus de terrain selon le préambule de la revendication 1. Le procédé est caractérisé en ce que le signal de requête ou le signal de réponse utilise au plus trois bits pour le codage du contenu de l'information, et en ce que pour chaque cycle élémentaire, le signal de requête ou de réponse présente un nombre fixe de bits dont un bit est codé pour réaliser le séquencement des cycles et les autres bits servent au codage du contenu de l'information, tandis que le signal de réponse ou de requête correspondant présente pour un même nombre fixe de bits au moins deux bits qui sont codés pour numéroter le cycle élémentaire et les autres bits qui servent au codage du contenu de l'information.

Il est par conséquent possible de transmettre une information de plus de quatre bits dont le contenu est codé sur plusieurs séquences d'au plus 3 bits.

Des modes particuliers de réalisation de l'invention sont indiqués dans les revendications dépendantes.

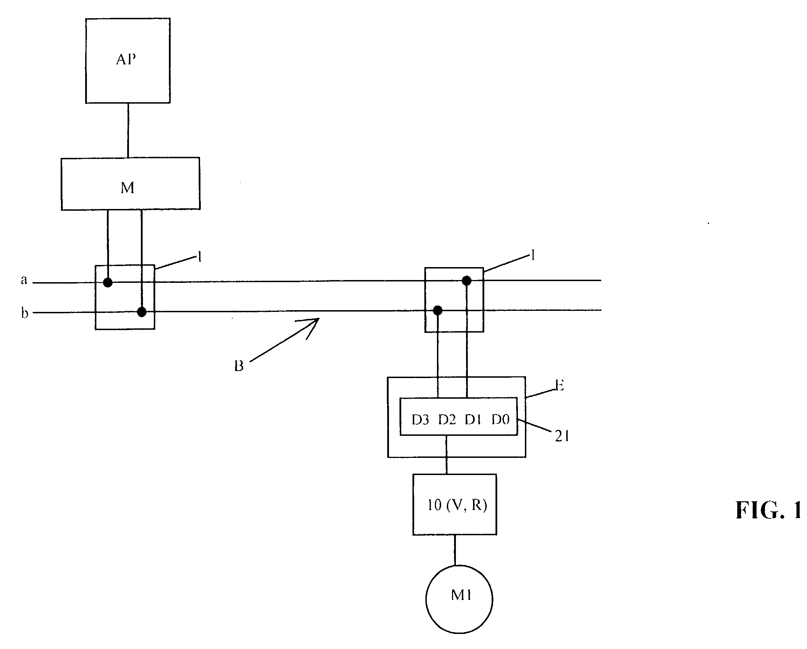

L'invention va maintenant être décrite avec plus de détail en se référant au dessin de la figure 1 qui illustre un schéma d'un bus auquel sont raccordés un automate programmable et un appareillage électrique.

Le protocole bidirectionnel de transmission d'informations selon l'invention sert à échanger des données sur un bus de terrain B, de type AS-i, entre un automate programmable AP et un appareillage électrique de commande ou de protection 10 d'un moteur électrique triphasé M1.

L'appareillage électrique 10 de commande peut consister en un variateur de vitesse V, et celui de protection, en un relais de protection R. L'appareillage électrique 10 est piloté par l'automate programmable AP au moyen du bus de terrain B via un module d'interface maître M, ci-après désigné "maître", qui est connecté au bus B et à l'automate AP, et un module d'interface esclave E, ci-après désigné "esclave", qui est interfacé entre le bus B et l'appareillage électrique 10. Le maître M et l'esclave E sont reliés au bus B via des coupleurs d'interface 1.

Le support physique du bus de terrain B est constitué de deux fils a et b qui permettent de véhiculer des signaux d'informations entre le maître M et l'esclave E et d'alimenter l'appareillage électrique 10 lorsque celui-ci ne nécessite pas une trop grande puissance de fonctionnement.

Le module d'interface maître M gère les informations arrivant sur ses entrées depuis l'automate AP, génère les commandes sur ses sorties et la requête envoyée sur le bus vers le maître et décode la réponse de l'esclave E.

Le module d'interface esclave E gère les informations arrivant du bus, décode la requête du maître M, et génère les commandes vers l'appareillage 10 ainsi que la réponse sur le bus à envoyer au maître. Le module E comporte un circuit intégré 21 pourvu notamment de quatre broches de données, repérées D0, D1, D2, D3 qui servent à recevoir ou à envoyer des informations provenant du module maître M et de l'appareillage électrique 10 sous la forme de signaux binaires. Les broches de données D0 à D3 sont configurées bidirectionnellement comme des entrées/sorties.

Les quatre broches de données D0 à D3, qui correspondent à des bits de données puisque recevant ou envoyant des signaux binaires, sont utilisées pour coder les informations.

Le protocole de transmission selon l'invention séquence une information sur un macrocycle de période donnée T en plusieurs cycles élémentaires ordonnés C0 à Cn qui comprennent chacun un signal de requête et un signal de réponse.

Pour les signaux de requête, un bit D3 est utilisé pour séquencer le macrocycle, c'est-à-dire pour définir le passage d'un cycle élémentaire à un autre, et les autres bits D2 à D0 servent au codage du contenu de l'information.

Pour les signaux de réponse, au moins deux bits D3 et D2 sont utilisés pour numéroter les cycles du macrocycle et les autres bits sont utilisés pour coder le contenu de l'information.

Expliquons la configuration du protocole de transmission pour l'échange d'une information à partir du tableau F1 ci-dessous.

| Requête (Maître) | | | | | | Réponse (Esclave) | | | |
|---|---|---|---|---|---|---|---|---|---|
| | D3 | D2 | D1 | D0 | | D3 | D2 | D1 | D0 |
| | 0 | 0 | 0 | 0 | → | 0 | 0 | 0 | 0 |
| | | | | | ← | | | | |
| | 0 | 0 | 0 | 0 | → | 0 | 0 | 0 | 0 |
| | | | | | ← | | | | |
| | 0 | 0 | 0 | 0 | → | 0 | 0 | 0 | 1 |
| | | | | | ← | | | | |
| Cycle C1, T/7 ms | 1 | x | x | x | → | 1 | 1 | 1 | x |
| | | | | | ← | | | | |
| Cycle C2, T/7 ms | 0 | x | x | x | → | 1 | 1 | 0 | x |
| | | | | | ← | | | | |
| Cycle C3, T/7 ms | 1 | x | x | x | → | 1 | 0 | 1 | x |
| | | | | | ← | | | | |
| Cycle C4, T/7 ms | 0 | x | x | x | → | 1 | 0 | 0 | x |
| | | | | | ← | | | | |
| Cycle C5, T/7 ms | 1 | x | x | x | → | 0 | 1 | 1 | x |
| | | | | | ← | | | | |
| Cycle C6, T/7 ms | 0 | x | x | x | → | 0 | 1 | 0 | x |
| | | | | | ← | | | | |
| Cycle C7, T/7 ms | 1 | x | x | x | → | 0 | 0 | 1 | x |
| | | | | | ← | | | | |

L'initialisation d'un macrocycle est réalisée en codant les bits d'une requête et d'une réponse à "0". Lorsque le bit de codage D0 d'une réponse passe à "1", cela signifie que le maître M peut commencer à envoyer sa commande car l'esclave E est prêt.

Sur un macrocycle de période T comprenant 7 cycles élémentaires au maximum C1 à C7, les requêtes utilisent un seul bit D3 pour séquencer la période T, ce bit prenant alternativement la valeur "0" et "1" pour faire état de chaque changement de cycle. Les trois autres bits D2, D1, D0 sont utilisés pour transmettre le contenu des requêtes. Leur valeur notée x prend l'état "0" ou "1" et définit par exemple une commande ou une valeur analogique comme nous le décrirons ultérieurement dans le tableau F2.

Les réponses, qui sont séquencées sur les sept cycles, doivent pouvoir transmettre leur contenu en indiquant le numéro du cycle correspondant à celui de la requête émise. Le codage de la numérotation est réalisé sur trois bits D3, D2 et D1, tandis que le quatrième bit D0 sert au codage de l'information, sa valeur notée x pouvant prendre l'état "0" ou "1".

Les combinaisons possibles pour le codage de la numérotation sur les 3 bits D3, D2 et D1 sont les suivantes : 111, 110, 101, 100, 011, 010, 001. Il n'est pas possible d'utiliser la combinaison 000 car selon la valeur du bit D0, la réponse pourrait s'écrire 0001 ou 0000 ce qui correspond à l'état de prêt à répondre ou respectivement à l'initialisation de la réponse.

Ainsi, les informations transmises sur un macrocycle de période T qui est séquencée en sept cycles peut être codée sur sept triplets de 3 bits pour les sept requêtes et sur sept fois 1 bit pour les réponses. Au total, l'information peut être codée sur 21 bits pour l'ensemble des requêtes et sur 7 bits pour l'ensemble des réponses.

Il est possible de coder la numérotation des cycles élémentaires d'une autre manière. Les deux premiers cycles C1 et C2 sont codés sur deux bits D3 et D2 et les autres cycles C3 à C7 sont codés sur trois bits D3, D2 et D1. Pour un macrocycle de 7 cycles élémentaires, le codage de la numérotation peut s'effectuer successivement pour chacun des cycles de la façon suivante : 10, 01, 1110, 1101, 0010, 0011, 0001. Chaque signal de réponse de l'information est alors codé sur 4 bits seulement au lieu de 7 bits. Ce codage de la numérotation est en fait intéressant pour un macrocycle comportant au plus quatre cycles élémentaires C1 à C4, car il permet de pouvoir utiliser deux bits supplémentaires pour coder le contenu de l'information. Les combinaisons de numérotation pour quatre cycles C1 à C4 sont les suivantes : 10, 01, 110, 001.

Selon le type d'échange d'informations entre l'unité de contrôle et de commande et l'appareillage électrique, l'ensemble des requêtes et l'ensemble des réponses ne nécessitent pas le même nombre de bits.

Ainsi pour un échange d'informations du type commande d'un moteur électrique via un variateur de vitesse, les requêtes ont généralement besoin de beaucoup plus de bits que les réponses pour être véhiculées, le codage des bits sera celui explicité dans le tableau F1 et pris comme exemple dans le tableau F2 qui suit.

Pour un échange d'informations du type protection d'un moteur électrique via un relais de protection, les réponses utilisent plus de bits que les requêtes. Le codage de l'information, explicité dans le tableau F1, sera inversé. Le tableau F4, montré ultérieurement, décrit ce type d'exemple. Ainsi le séquencement des cycles se fait au niveau des réponses et la numérotation des cycles se fait au niveau des requêtes. Pour sept cycles, les requêtes seront codées sur 7 bits et les réponses seront codées sur 21 bits.

Le tableau F2 ci-dessous résume la configuration des bits D0, D1, D2, D3 pour l'échange d'une information du type commande entre l'automate AP et le variateur V. Les requêtes et les réponses sont échangées en six cycles de 5 ms.

| Requête (AP) | | | | | | Réponse (V) | | | |
|---|---|---|---|---|---|---|---|---|---|
| | D3 | D2 | D1 | D0 | | D3 | D2 | D1 | D0 |
| | 0 | 0 | 0 | 0 | → | 0 | 0 | 0 | 0 |
| | | | | | ← | | | | |
| | 0 | 0 | 0 | 0 | → | 0 | 0 | 0 | 0 |
| | | | | | ← | | | | |
| | 0 | 0 | 0 | 0 | → | 0 | 0 | 0 | 1 |
| | | | | | ← | | | | |
| Cycle C1 5 ms | 1 | Marche-avant Arrêt | Marche-arrière Arrêt | Commande Spéciale 1 | → | 1 | 1 | 1 | Prêt |
| | | | | | ← | | | | |
| Cycle C2 5 ms | 0 | Commande Spéciale 2 | Consigne (7) | Consigne (6) | → | 1 | 1 | 0 | en Marche |
| | | | | | ← | | | | |
| Cycle C3 5 ms | 1 | Consigne (5) | Consigne (4) | Consigne (3) | → | 1 | 0 | 1 | Consigne atteinte |
| | | | | | ← | | | | |
| Cycle C4 5 ms | 0 | Consigne (2) | Consigne (1) | Consigne (0) | → | 1 | 0 | 0 | information spéciale 1 |
| | | | | | ← | | | | |
| Cycle C5 5 ms | 1 | Ramp select | Commande Spéciale 3 | Commande Spéciale 4 | → | 0 | 1 | 1 | Information spéciale 2 |
| | | | | | ← | | | | |
| Cycle C6 5 ms | 0 | Commande Spéciale 5 | Commande Spéciale 6 | Commande Spéciale 7 | → | 0 | 1 | 0 | Information spéciale 3 |
| | | | | | ← | | | | |

La transmission du contenu de l'information réalisée sur les cycles C1 à C6 se fait pour chacun des cycles sur 3 bits du maître vers l'esclave et sur 1 bit en retour de l'esclave vers le maître. Au total, l'information est véhiculée en 30 ms en utilisant 18 bits pour les requêtes et 6 bits pour les réponses.

Pour les requêtes de l'automate AP vers le variateur V:
- dans le cycle C1, les bits D2 et D1 sont utilisés pour la "marche-avant" et respectivement la "marche-arrière" du moteur ou son "arrêt". Ces fonctions sont précodifiées dans le variateur de vitesse;
- dans les cycles C1, C2, C5 et C6, les bits utilisés en tant que "commande spéciale 1 à 7" correspondent par exemple à la commande d'un appareil électrique associé au variateur tel qu'un contacteur;
- dans les cycles C2, C3 et C4, les bits utilisés en tant que "consigne (0) à (7)", permettent de coder sur 8 bits une valeur analogique de la vitesse à atteindre par le moteur;
- dans le cycle C5, le bit utilisé en tant que "ramp select" permet de choisir entre deux possibilités de rampe qui sont paramétrées en inteme dans le variateur.

Pour les réponses du variateur V vers l'automate AP donnant l'état du moteur électrique:
- le bit D0 du cycle C1 codé "Prêt" correspond à l'aptitude du variateur à recevoir une commande;
- le bit D0 du cycle C2 codé en marche" signifie que le moteur tourne ou non;
- le bit D0 codé "consigne atteinte" permet de renseigner si la vitesse de consigne du moteur est atteinte.

Le tableau F3 ci-dessous simule une commande du tableau F2 entre l'automate programmable et le variateur de vitesse. Le moteur doit être mis en marche avant, atteindre une valeur de vitesse égale à 25 Hz selon une valeur de rampe d'accélération prédéfinie dans le variateur de vitesse. Cette commande se déroule sur plusieurs macrocycles T1 à Ti de 30 ms.

| Requête (AP) | | | | | | Réponse (V) | | | |
|---|---|---|---|---|---|---|---|---|---|
| | D3 | D2 | D1 | D0 | | D3 | D2 | D1 | D0 |
| | 0 | 0 | 0 | 0 | → | 0 | 0 | 0 | 0 |
| | | | | | ← | | | | |
| | 0 | 0 | 0 | 0 | → | 0 | 0 | 0 | 0 |
| | | | | | ← | | | | |
| | 0 | 0 | 0 | 0 | → | 0 | 0 | 0 | 1 |
| | | | | | ← | | | | |
| Période T1 | | | | | | | | | |
| Cycle C1, 5 ms | 1 | 0 | 0 | 0 | → | 1 | 1 | 1 | 0 |
| | | | | | ← | | | | |
| Cycle C2, 5 ms | 0 | 0 | 0 | 0 | → | 1 | 1 | 0 | 0 |
| | | | | | ← | | | | |
| Cycle C3, 5 ms | 1 | 0 | 0 | 0 | → | 1 | 0 | 1 | 0 |
| | | | | | ← | | | | |
| Cycle C4, 5 ms | 0 | 0 | 0 | 0 | → | 1 | 0 | 0 | 0 |
| | | | | | ← | | | | |
| Cycle C5, 5 ms | 1 | 0 | 0 | 0 | → | 0 | 1 | 1 | 0 |
| | | | | | ← | | | | |
| Cycle C6, 5 ms | 0 | 0 | 0 | 0 | → | 0 | 0 | 0 | 0 |
| | | | | | ← | | | | |
| Période T2 | | | | | | | | | |
| Cycle C1, 5 ms | 1 | 0 | 0 | 0 | → | 1 | 1 | 1 | 1 |
| | | | | | ← | | | | |
| Cycle C2, 5 ms | 0 | 0 | 0 | 0 | → | 1 | 1 | 0 | 0 |
| | | | | | ← | | | | |
| Cycle C3, 5 ms | 1 | 0 | 0 | 0 | → | 1 | 0 | 1 | 0 |
| | | | | | ← | | | | |
| Cycle C4, 5 ms | 0 | 0 | 0 | 0 | → | 1 | 0 | 0 | 0 |
| | | | | | ← | | | | |
| Cycle C5, 5 ms | 1 | 0 | 0 | 0 | → | 0 | 1 | 1 | 0 |
| | | | | | ← | | | | |
| Cycle C6, 5 ms | 0 | 0 | 0 | 0 | → | 0 | 1 | 0 | 0 |
| | | | | | ← | | | | |
| Période T3 | | | | | | | | | |
| Cycle C1, 5ms | 1 | 1 | 0 | 0 | → | 1 | 1 | 1 | 1 |
| | | | | | ← | | | | |
| Cycle C2, 5ms | 0 | 0 | 0 | 1 | → | 1 | 1 | 0 | 0 |
| | | | | | ← | | | | |
| Cycle C3, 5ms | 1 | 1 | 1 | 1 | → | 1 | 0 | 1 | 0 |
| | | | | | ← | | | | |
| Cycle C4, 5ms | 0 | 1 | 1 | 1 | → | 1 | 0 | 0 | 0 |
| | | | | | ← | | | | |
| Cycle C5, 5ms | 1 | 0 | 0 | 0 | → | 0 | 1 | 1 | 0 |
| | | | | | ← | | | | |
| Cycle C6, 5ms | 0 | 0 | 0 | 0 | → | 0 | 1 | 0 | 0 |
| | | | | | ← | | | | |
| Période T4 | | | | | | | | | |
| Cycle C1, 5 ms | 1 | 1 | 0 | 0 | → | 1 | 1 | 1 | 1 |
| | | | | | ← | | | | |
| Cycle C2, 5 ms | 0 | 0 | 0 | 1 | → | 1 | 1 | 0 | 1 |
| | | | | | ← | | | | |
| Cycle C3, 5 ms | 1 | 1 | 1 | 1 | → | 1 | 0 | 1 | 0 |
| | | | | | ← | | | | |
| Cycle C4, 5 ms | 0 | 1 | 1 | 1 | → | 1 | 0 | 0 | 0 |
| | | | | | ← | | | | |
| Cycle C5, 5 ms | 1 | 0 | 0 | 0 | → | 0 | 1 | 1 | 0 |
| | | | | | ← | | | | |
| Cycle C6, 5 ms | 0 | 0 | 0 | 0 | → | 0 | 1 | 0 | 0 |
| | | | | | ← | | | | |
| | | | | | | | | | |
| | | | | | | | | | |
| Période Ti | | | | | | | | | |
| Cycle C1, 5 ms | 1 | 1 | 0 | 0 | → | 1 | 1 | 1 | 1 |
| | | | | | ← | | | | |
| Cycle C2, 5 ms | 0 | 0 | 0 | 1 | → | 1 | 1 | 0 | 1 |
| | | | | | ← | | | | |
| Cycle C3, 5 ms | 1 | 1 | 1 | 1 | → | 1 | 0 | 1 | 1 |
| | | | | | ← | | | | |
| Cycle C4, 5 ms | 0 | 1 | 1 | 1 | → | 1 | 0 | 0 | 0 |
| | | | | | ← | | | | |
| Cycle C5, 5 ms | 1 | 0 | 0 | 0 | → | 0 | 1 | 1 | 0 |
| | | | | | ← | | | | |
| Cycle C6, 5 ms | 0 | 0 | 0 | 0 | → | 0 | 1 | 0 | 0 |
| | | | | | ← | | | | |

Durant la première période T1, le variateur de vitesse n'est pas encore prêt à piloter le moteur M1:
- les requêtes codent "0" pour les bits D2, D1 et D0 puisqu'aucune commande de l'automate n'a besoin d'être envoyée ;
- les réponses codent "0" pour le bit D0 correspondant à "Prêt" du premier cycle C1 puisque le variateur n'est pas prêt, et "0" pour le bit D0 des autres cycles puisqu'aucun ordre n'est envoyé et donc reçu par le variateur.

Pour la deuxième période T2, le variateur de vitesse est prêt à recevoir des ordres :
- le bit D0 de la réponse du cycle C1 correspondant à "Prêt" passe à "1".
   A la troisième période T3, l'automate peut alors envoyer sa commande de marche-avant à 25 Hz:
- le bit D2 du cycle C1 passe à "1" pour la fonction marche-avant";
- les 8 bits "consigne (0) à (7)" sont codés "01111111", ce qui représente la valeur de 25 Hz en binaire, sachant qu'à titre d'exemple le code "11111111" correspond à la vitesse maximale paramétrée dans le variateur à savoir 50 Hz;
- le bit "ramp select" est mis à "0" ce qui correspond à une valeur de rampe paramétrée dans le variateur.

La quatrième période T4 correspond à la prise en compte de l'ordre de marche du moteur M1:
- le bit D0 de la réponse correspondant à "en marche" passe à "1".

Après plusieurs périodes identiques à la période T4, c'est-à-dire lorsque le temps de rampe est atteint et durant la période Ti:
- le bit D0 de la réponse correspondant à "consigne atteinte" passe à "1", le moteur ayant atteint la vitesse de 25 Hz.

Le tableau F4 ci-dessous résume la configuration des bits D0, D1, D2, D3 pour l'échange d'une information du type protection entre l'automate AP et le relais de protection R.

| Requête (AP) | | | | | | Réponse (R) | | | |
|---|---|---|---|---|---|---|---|---|---|
| | D3 | 02 | D1 | D0 | | D3 | D2 | D1 | D0 |
| | 0 | 0 | 0 | 0 | → | 0 | 0 | 0 | 0 |
| | | | | | ← | | | | |
| Cycle C1 5 ms | 1 | 1 | 1 | Marche-avant / Arrêt | → | 1 | Prêt | Actif | Défaut |
| | | | | | ← | | | | |
| Cycle C2 5 ms | 1 | 1 | 0 | Marche-arrière / Arrêt | → | 0 | Local | Valeur 7 | Valeur 6 |
| | | | | | ← | | | | |
| Cycle C3 5 ms | 1 | 0 | 1 | Commande Spéciale 1 | → | 1 | Valeur 5 | Valeur 4 | Valeur 3 |
| | | | | | ← | | | | |
| Cycle C4 5 ms | 1 | 0 | 0 | Commande Spéciale 2 | → | 0 | Valeur 2 | Valeur 1 | Valeur 0 |
| | | | | | ← | | | | |
| Cycle C5 5 ms | 0 | 1 | 1 | Commande Spéciale 3 | → | 1 | adresse 2 | adresse 1 | adresse 0 |
| | | | | | ← | | | | |
| Cycle C6 5 ms | 0 | 1 | 0 | Commande Spéciale 4 | → | 0 | Information spéciale 1 | Information spéciale 2 | Information spéciale 3 |
| | | | | | ← | | | | |

L'initialisation d'un macrocycle est réalisée en codant les bits d'une requête et d'une réponse à "0". Lorsque le bit D3 d'une réponse bascule sur "1", le premier cycle démarre et l'esclave est donc prêt à envoyer un message.

Pour les requêtes de commande de l'automate vers le relais:
- les bits D3 à D1 sont utilisés pour numéroter les cycles, et les bits D0 correspondent successivement aux commandes "marche-avant", marche-arrière" ainsi qu'à la mise en fonctionnement de produits auxiliaires ("commandes spéciales" 1 et 4).

Pour les réponses du relais vers l'automate, le relais étant destiné à envoyer à l'automate les valeurs du courant dans chaque phase du moteur :
- pour chacun des cycles, le bit D3 sert à indiquer le changement de cycle, le bit passant alternativement de "1" à "0";
- pour le cycle C1, "Prêt" signifie que le circuit en amont du relais est fermé, "actif" signifie que la commande est bien reçue et est prête à être exécutée, "défaut" signifie qu'un défaut survient au niveau du courant d'alimentation du moteur;
- pour le cycle C2, "local" signifie que l'action de couper l'alimentation peut se faire localement et non via le bus;
- pour les autres cycles, "valeur 7 à 0" permet d'écrire, en codage binaire et sur 8 bits, la valeur analogique de la mesure d'un courant de phase;
- "adresse 2 à 0" permet de coder sur 3 bits le numéro de la phase sur laquelle est effectuée la mesure;
- "information spéciale 1 à 3" permet d'indiquer le fonctionnement de produits auxiliaires comme des capteurs par exemple.

Les exemples ci-dessus des tableaux F3 et F4 ont été pris sur des périodes de 6 cycles. Il va de soi que selon le nombre de bits désirés pour la transmission d'une information, la période du macrocycle peut être écourtée ou prorogée au maximum à 7 cycles. Ainsi, sur une période de 4 cycles par exemple, l'information peut être échangée sur 12 bits au plus pour les requêtes ou les réponses et sur 6 bits au plus pour les réponses ou requêtes correspondantes. Sur une période de 7 cycles, l'information peut être échangée sur 21 bits et 7 bits au plus.

## Revendications

1. Procédé de transmission bidirectionnel d'informations sur un bus de terrain (B) entre une unité de contrôle et de commande, tel qu'un automate programmable (AP), et un appareillage électrique (10) au moyen de modules d'interface respectifs maître (M) et esclave (E), le module d'interface maître étant associé à l'unité de contrôle et de commande et le module d'interface esclave étant associé à l'appareillage électrique, le procédé comprenant des étapes de transmission de signaux de requête émis du module maître (M) vers le module esclave (E) et des étapes de transmission de signaux de réponse émis du module esclave vers le module maître, lesdits signaux de requête et de réponse étant codés de manière binaire sur des bits de broches de données (D0, D1, D2, D3) d'un circuit intégré (21) interne au module esclave (E), l'échange d'une information entre le module maître (M) et le module esclave (E) consistant en l'échange de plusieurs signaux de requête et signaux de réponse codés sur un macrocycle de période (T) et séquencés sur ce macrocycle en plusieurs cycles élémentaires ordonnés (C1 à Cn) qui comprennent chacun un seul signal de requête et un seul signal de réponse, **caractérisé en ce que** ledit signal de requête ou ledit signal de réponse utilise au plus trois bits pour le codage du contenu de l'information, et **en ce que** pour chaque cycle élémentaire (C1 à Cn), le signal de requête ou de réponse présente un nombre fixe de bits dont un bit (D3) est codé pour réaliser le séquencement des cycles et les autres bits (D2, D1, D0) servent au codage du contenu de l'information, tandis que le signal de réponse ou de requête correspondant présente pour un même nombre fixe de bits au moins deux bits (D3, D2) qui sont codés pour numéroter le cycle élémentaire et les autres bits qui servent au codage du contenu de l'information.

2. Procédé de transmission bidirectionnel d'informations selon la revendication 1, **caractérisé en ce que** le bit de codage (D3) servant au séquencement du macrocycle change alternativement de valeur ("0", "1") de façon à identifier chaque changement de cycle élémentaire.

3. Procédé de transmission bidirectionnel d'informations selon la revendication 1, **caractérisé en ce que** pour numéroter quatre cycles élémentaires (C1 à C4) d'un macrocycle, deux bits (D3, D2) sont utilisés pour numéroter les deux premiers cycles, chacun des autres cycles étant numéroté sur trois bits (D3, D2, D1).

4. Procédé de transmission bidirectionnel d'informations selon la revendication 1, **caractérisé en ce que** pour numéroter sept cycles élémentaires (C1 à C7) d'un macrocycle, trois bits (D3, D2, D1) sont utilisés pour numéroter chacun des cycles.

## Claims

1. Method for the bidirectional transmission of information on a field bus (B) between a control and command unit, such as a programmable logic controller (PLC), and an electrical apparatus (10) by means of respective master (M) and slave (E) interface modules, the master interface module being associated with the control and command unit and the slave interface module being associated with the electrical apparatus, the method comprising steps for transmitting request signals sent from the master module (M) to the slave module (E) and steps for transmitting response signals sent from the slave module to the master module, said request and response signals being binary encoded on data pin bits (D0, D1, D2, D3) of an integrated circuit (21) internal to the slave module (E), the exchange of information between the master module (M) and the slave module (E) consisting in the exchange of several request signals and response signals encoded on one macrocycle of period (T) and sequenced on this microcycle into several ordered basic cycles (C1 to Cn) which each include a single request signal and a single response signal, **characterized in that** said request signal or said response signal uses at most three bits for encoding the content of the information, and **in that**, for each basic cycle (C1 to Cn), the request or response signal has a fixed number of bits, of which one bit (D3) is encoded to handle the sequencing of the cycles and the other bits (D2, D1, D0) are used to encode the content of the information, whereas the corresponding response or request signal has, for one and the same fixed number of bits, at least two bits (D3, D2) which are encoded to number the basic cycle and the other bits which are used to encode the content of the information.

2. Method for the bidirectional transmission of information according to Claim 1, **characterized in that** the encoding bit (D3) used for the sequencing of the macrocycle alternately changes value ("0", "1") so as to identify each change of basic cycle.

3. Method for the bidirectional transmission of information according to Claim 1, **characterized in that**, to number four basic cycles (C1 to C4) of a macrocycle, two bits (D3, D2) are used to number the first two cycles, each of the other cycles being numbered on three bits (D3, D2, D1).

4. Method for the bidirectional transmission of information according to Claim 1, **characterized in that**, to number seven basic cycles (C1 to C7) of a macrocycle, three bits (D3, D2, D1) are used to number each of the cycles.

## Patentansprüche

1. Verfahren zur bidirektionalen Übertragung von Informationen auf einem Feldbus (B) zwischen einer Kontroll- und Steuereinheit, wie einer programmierbaren Steuerung (AP), und einer elektrischen Einrichtung (10) mit Hilfe von Master- (M) bzw. Slave-Schnittstellenmodulen (E), wobei der Master-Schnittstellenmodul der Kontroll- und Steuereinheit und der Slave-Schnittstellenmodul der elektrischen Einrichtung zugeordnet ist, wobei das Verfahren Schritte der Übertragung von Anforderungssignalen, die vom Master-Modul (M) zum Slave-Modul (E) gesendet werden, und Schritte der Übertragung von Antwortsignalen, die vom Slave-Modul zum Master-Modul gesendet werden, aufweist, wobei die Anforderungs- und Antwortsignale binär mit Bits von Daten-Anschlussstiften (D0, D1, D2, D3) einer integrierten Schaltung (21) innerhalb des Slave-Moduls (E) codiert werden, wobei der Austausch einer Information zwischen dem Master-Modul (M) und dem Slave-Modul (E) aus dem Austausch von mehreren Anforderungssignalen und Antwortsignalen besteht, die in einem Makrozyklus der Periode (T) codiert und in diesem Makrozyklus in mehrere geordnete Elementarzyklen (C1 bis Cn) sequenziert sind, die je ein einziges Anforderungssignal und ein einziges Antwortsignal aufweisen, **dadurch gekennzeichnet, dass** das Anforderungssignal oder das Antwortsignal höchstens drei Bits für die Codierung des Inhalts der Information verwendet, und dass das Anforderungs- oder Antwortsignal für jeden Elementarzyklus (C1 bis Cn) eine feststehende Anzahl von Bits aufweist, von denen ein Bit (D3) codiert ist, um die Sequenzierung der Zyklen durchzuführen, und die anderen Bits (D2, D1, D0) zur Codierung des Inhalts der Information dienen, während das entsprechende Antwort- oder Anforderungssignal für die gleiche feststehende Anzahl von Bits mindestens zwei Bits (D3, D2), die codiert sind, um den Elementarzyklus zu nummerieren, und die anderen Bits aufweist, die zur Codierung des Inhalts der Information dienen.

2. Verfahren zur bidirektionalen Übertragung von Informationen nach Anspruch 1, **dadurch gekennzeichnet, dass** das Codierbit (D3), das zur Sequenzierung des Makrozyklus dient, abwechselnd seinen Wert ändert ("0", "1"), um jede Elementarzyklusänderung zu identifizieren.

3. Verfahren zur bidirektionalen Übertragung von Informationen nach Anspruch 1, **dadurch gekennzeichnet, dass** zur Nummerierung von vier Elementarzyklen (C1 bis C4) eines Makrozyklus zwei Bits (D3, D2) verwendet werden, um die beiden ersten Zyklen zu nummerieren, wobei jeder der anderen Zyklen mit drei Bits (D3, D2, D1) nummeriert wird.

4. Verfahren zur bidirektionalen Übertragung von Informationen nach Anspruch 1, **dadurch gekennzeichnet, dass** zur Nummerierung von sieben Elementarzyklen (C1 bis C7) eines Makrozyklus drei Bits (D3, D2, D1) verwendet werden, um jeden der Zyklen zu nummerieren.
